# EUROPEAN PATENT SPECIFICATION

(11) **EP 0 337 024 B1**
(45) Date of publication and mention of the grant of the patent: **24.08.1994**
(21) Application number: 88303290.6
(22) Date of filing: 13.04.1988
(51) Int. Cl.: A61C 5/04

(54) **Tool for use in applying filler material to an endodontically prepared root canal**
Instrument zum Füllen von Zahnwurzelkanälen
Instrument servant à l'obturation du canal radiculaire

(43) Date of publication of application: 18.10.1989
(73) Proprietor: Johnson, William B., Tulsa Oklahoma 74136 (US)
(72) Inventor: Johnson, William B., Tulsa Oklahoma 74136 (US)
(74) Representative: Gilmour, David Cedric Franklyn

(56) References cited:
- CA-A- 1 220 369
- FR-A- 2 163 953
- US-A- 3 318 000
- US-A- 3 534 476

## Description

### Summary of the Invention

The conventional techniques for performing endodontic therapy on teeth are time consuming and often do not adequately ensure that the entire canal system is filled with the repair material. Experience has shown that it is not possible to remove all pulpal remnants and contaminants from a root canal with current preparation techniques. If the said pulpal remnants and contaminants are thoroughly entombed in the repair material, the endodontic therapy will be successful. If said remnants and contaminants are not thoroughly entombed, there is a high probability of failure of the endodontic therapy. Complete entombment of the remnants and contaminants requires complete obturation of the canal system. Experience has shown failure to completely obturate the canal system to be the primary cause of failure in endodontic therapy.

Incomplete obturation of a root canal system is primarily due to insufficient hydrostatic pressure to effect the proper flow of the filler material to the irregularities of the canal system. Canals are seldom circular in cross section. Thus, any repair material inserted into the canal must be able to compensate for the lack of circularity by flowing to the major diameter volumes. Canals will often have lateral canals and fissures that must be filled with the repair material to ensure the success of the therapy. Hydrostatic pressure must be applied to the repair material to ensure its flow into the lateral canals and fissures.

A common endodontic procedure employs silver cones used in conjunction with pastes to fill irregularities. Silver, being a highly malleable metal, will bend and adjust to the curvature of a root canal; but, since silver cones are manufactured in true circular cross section, they do not adjust to a canal that is irregular in cross section which is most often the case. The silver cones are not capable of exerting hydrostatic pressure on the sealer material, thus there is no satisfactory assurance that lateral canals and fissures are sealed.

Another common endodontic procedure employs a filler material, such as gutta-percha as the repair material. Gutta-percha is a semi-rigid material at normal room temperature. However, when it is heated, it becomes less rigid and will flow when force is applied to it. Gutta-percha, however, does not retain heat very long, thus the technique requires small amounts of the material be heated and packed into the canal in sequential manner with frequent reheating of the material in the canal. This process is slow and time consuming and also is fraught with the risk that gutta-percha deep into the canal will not be heated sufficiently by in-situ techniques and thus, will not flow properly into the irregularities of the canal.

Another common endodontic procedure is to employ a gutta-percha heating and injection device. This device is commonly referred to as a gutta-percha gun. The gun supplies the gutta-percha to the canal heated and under sufficient pressure so as to insure that the canal irregularities will be adequately filled. The problem with the gun technique is that there is no satisfactory method of insuring that the repair material will not extrude through the apex of the root and result in an impacted mass left in the gum.

It is obvious that a technique that can administer a repair material throughout the canal under sufficient hydrostatic pressure will ensure that all the lateral canals and fissures will be filled and will also ensure that all of the remnant pulpal material and contamininants will be sufficiently entombed. It is further obvious that if the technique could adequately prevent the extrusion of the repair material through the canal apex, it would be an improvement over the known techniques. It is further obvious that if the techniques could be performed in a single operation rather than in a sequential fashion there would be time and thus economic advantages of significance over the known techniques. The invention described hereunder offers such advantages.

There is disclosed in FR-A-2163953 a tool for use in filling an endodontically prepared root canal wherein a shaft which is severable from the handle by means of reduced diameter portion 7 also has an auger or screw threaded portion along most of its length to enable such to be rotatably inserted into a canal so as to locate paste therein.

The device of the present invention is defined in Claim 1 and the subject matter thereof is incorporated herein by reference. The device is in the form of a rigid carrier member coated with gutta-percha or similar filler material. The carrier member is a tapered, slender rod. The carrier member may be constructed of any material which is of sufficient rigidity and non-toxic when left in the root canal. One material that has been employed successfully is stainless steel. A plastic or aluminum carrier member also works successfully.

The carrier member incorporates a matte finish, or radial ribbing to provide adhesion surfaces for the gutta-percha and to serve as a mechanical piston to assist in forcing the gutta-percha into the canal.

In one embodiment the tip of the carrier member that is intended for the apex end of the canal incorporates a flat surface which is pointed at the extremity. The carrier member can thus be forced into the canal at a sufficient depth into the taper which then prevents the carrier member from being able to rotate in the canal. A shaft of the carrier member has an area of lesser diameter than the normal diameter. This point of minor diameter or reduced torque resistance area is designed to fail when a certain level of torque is applied to the handle of the carrier member. The flat on the extremity of the carrier member prevents rotation of the carrier member, thus the member will fail when a torque is applied to the handle. The reduced torque resistance area is located at a specific point on the carrier member at the desired level in the canal. The portion of the carrier member shaft above the reduced torque resistance area is of constant cross section (i.e. not ribbed) to facilitate removal of the member through the semi-rigid gutta-percha without pulling said gutta-percha out of the canal.

A disc-shaped washer is incorporated on the shaft of the carrier member and serves to act as a stopping plug at the coronal opening of the canal and thus to prevent viscous flow of the gutta-percha out of the said canal during the insertion process.

The gutta-percha is moulded to the carrier member in a tapered or conically-shaped manner so as to facilitate the introduction into the typical canal taper with sufficient material to ensure complete filling of the said canal and thereby complete obturation of the canal.

The devices may be manufactured in a variety of sizes to correspond to standard endodontic files.

In using the tool of this invention the root canal is first prepared in the standard manner by broaching with endodontic files. The final file used in the apex preparation determines the proper gutta-percha device. A carrier member of proper size is prepared with gutta-percha and the gutta-percha is heated over to the point at which the surface is glossy. The heated apparatus is then inserted into the root canal with firm apical force. The handle portion of the carrier member is then rotated while maintaining the apical force until torsional failure occurs.

The shank of the carrier member is then removed while holding the stopping plug or washer against the tooth and the remainder of the endodontic therapy is completed using conventional procedures.

For more information as to background material relating to the present invention reference may be had to pages 184 through 188 of the Journal of Endodontics, Volume 4, No. 6, June 1978 which describes a new gutta-percha technique in which the gutta-percha is formed around an endodontic file.

A better understanding of the invention will be had by reference to the following description and claims, taken in conjunction with attached drawings.

### Description of the Drawings

Figure 1 is an enlarged elevational view of the tool, or carrier member of the present invention. The tool includes a slidable stopper or washer which is shown in cross-section.

Figure 2 is an elevational view as in Figure 1 showing the lower portion of the tool as encapsulated in a conically-shaped quantity of filler material, such as gutta-percha. As shown in Figure 2 apparatus is ready for use in filling an endodontically prepared root canal.

Figure 3 shows a tooth in cross-section with the root canal having been endodontically prepared and showing the appliance of this invention, in reduced scale, as being employed to apply filler material to one of the endodontically prepared roots.

Figure 4 is a cross-sectional view of the tooth as in Figure 3 showing the appliance inserted into the root canal.

Figure 5 shows the next step in a sequence of applying filler material to the root canal wherein the tool has been rotated to sever the proximal portion from the distal portion.

Figure 6 shows the removal of the proximal portion of the tool with the distal portion being retained in the root canal with the filler material.

Figure 7 is an elevational view of an alternate embodiment of the tool of Figure 1 in which the shaft of the tool has a matte surface finish.

Figure 8 is an elevational view of an additional alternate embodiment substantially that of Figure 7 but wherein the shaft includes spaced circumferential identations.

Figure 9 is an elevational view of an embodiment as in Figure 7 and 8 wherein the shaft includes spaced indentations which are relatively narrow compared to the indentations of Figure 8.

Figure 10 is an elevational view of a still different embodiment including spaced enlarged diameter portions on the shaft.

### Detailed Description of the Preferred Embodiment

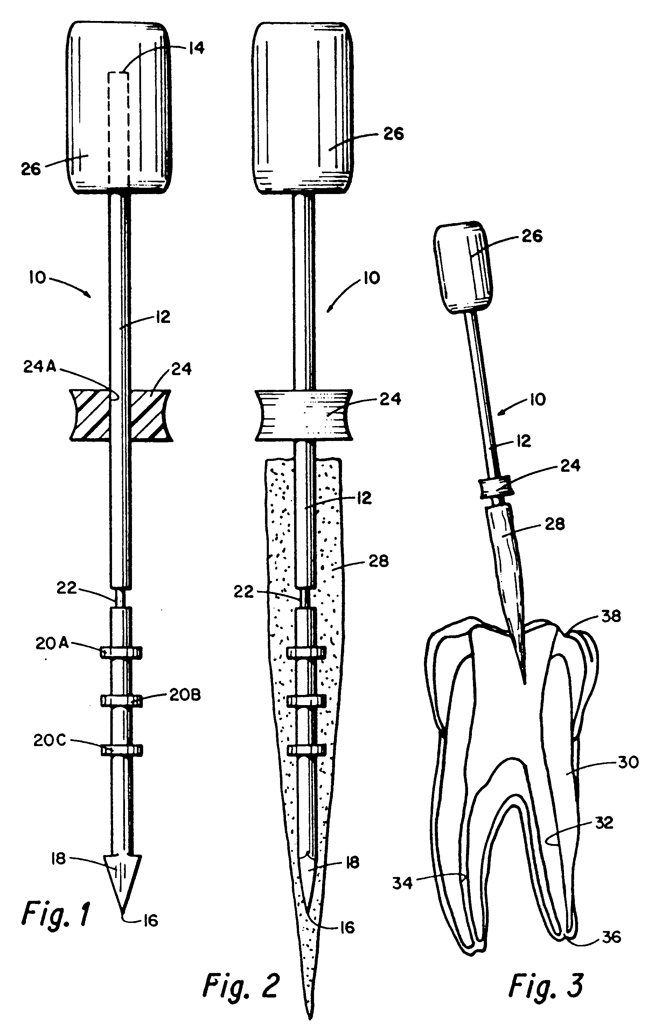

Referring to the drawings, and first to Figure 1, the tool which is a carrier member, is generally indicated by numeral 10 and is formed of an elongated shaft 12 having a proximal end 14 and distal end 16. While the shaft may be of a variety of cross-sectional configurations the preferred and simplest shape is that of a circular cross-sectional configuration as illustrated. At the distal ends 16 the shaft is flattened or flared at 18 into a non-circular cross-sectional configuration so that when the shaft is positioned in a root canal of a tooth, as will be hereinafter more specifically described, the flared end portion 18 resists rotation of the shaft. Integrally formed on the shaft are a plurality (three being shown) of spaced apart enlarged cross-sectional dimensioned portions 20A through 20C. When the shaft is circular cross-sectional as preferred, the enlarged diameter portion 20A, 20B and 20C are also preferably an enlarged circular cross-sectional configuration.

Positioned between the enlarged diameter portion 20A, and the proximal end 14 is a reduced torque resistance area 22. This is in the form, as shown, of a groove formed around the shaft. Between groove 22 and the proximal end 14 is a sliding stopper or washer 24 having an opening 24A therein which slidably receives shaft 12.

Affixed to the shaft at the proximal end 14 is a handle portion 26.

Handle 26 is of a diameter larger than that of a shaft 12 and may be integral with the shaft or is secured to the shaft and made of a material such as plastic.

Figure 2 shows the appliance ready for use in inserting a filler material, such as gutta-percha into the root canal of an endodontically prepared tooth. Figure 2 shows, in cross-section, filler material 28 formed on the tool 10. The filler material 28 may be such as gutta-percha which can be formed by hand onto tool 10. After forming, the gutta-percha may be warmed in a flame to the proper stage.

Figure 3 shows a tooth 30 having root canals 32 and 34 therein. A canal 32 has been endodontically prepared in the standard technique such as by the use of files to remove the root pulp and to prepare, as well as possible, a clean canal. The appliance formed of tool 10 with the filler material 28 moulded thereon is ready for use for filling the root canal 32. The apex of the root canal is indicated at 36 with the tooth crown or coronal portion being indicated by numeral 38.

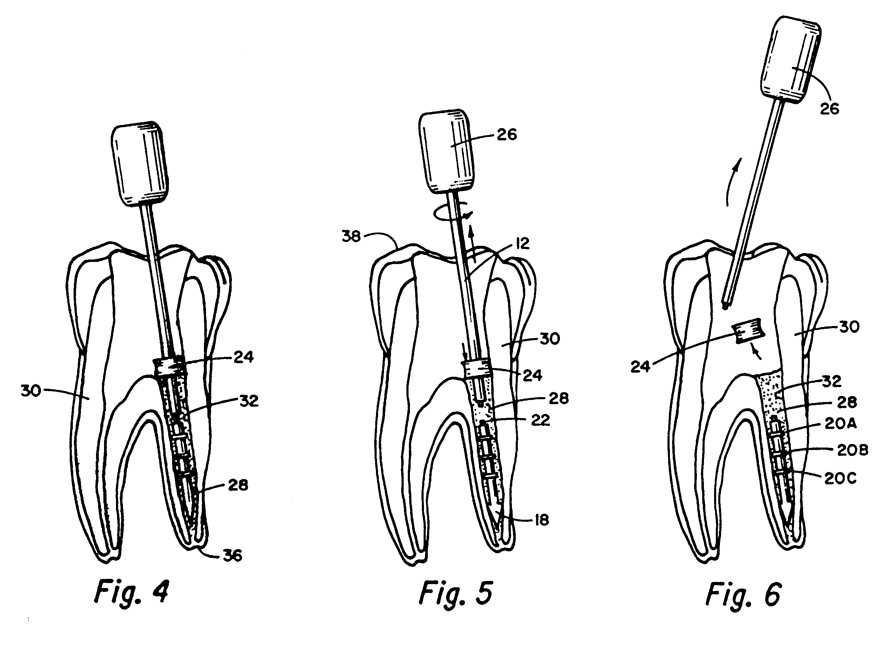

Figures 4 through 6 show the continuation of the step of filling root canal 32. Figure 4 shows the appliance inserted into the canal 32. The filler material 28 is forced by the insertion of the appliance to fill the canal to the apical area 36 of the tooth. After full insertion of the appliance as shown in Figure 4, rotational torque is applied to handle 26, severing the shaft at the reduced torque resistance area 22 as shown in Figure 5. This is possible since the flared distal end 18 of the shaft resists rotation relative to tooth 30.

After the shaft has been severed into two portions, the proximal portion is withdrawn. The sliding washer 24 is used to retain the filling material 28 in the canal by holding the washer downwardly as the proximal end portion of the shaft 12 is withdrawn.

Figure 6 shows the proximal portion of the tool being withdrawn. Washer 24 is then removed, leaving the distal portion of the shaft in place within the root canal 32. The root canal 32 can be more completely filled by applying additional filler material and by applying mechanical or hydraulic pressure to the filler material to force it into the root canal. The coronal area of the tooth can be filled in the usual way.

The depiction of the tooth 30 in Figures 3 through 6 is merely exemplary as teeth are individualistic and the drawings are intended to exemplify the steps involved rather than to accurately pictorially represent the appearance of the tooth or root canal therein.

The invention, thus, provides an unique and very effective way of conveying filler material, such as gutta-percha, into an endodontically prepared root canal. The prior art teaches the use of a file as a carrier of filler material, however, this known method, while functioning successfully for its intended purpose, nevertheless has limitations and problems which are overcome by the present invention.

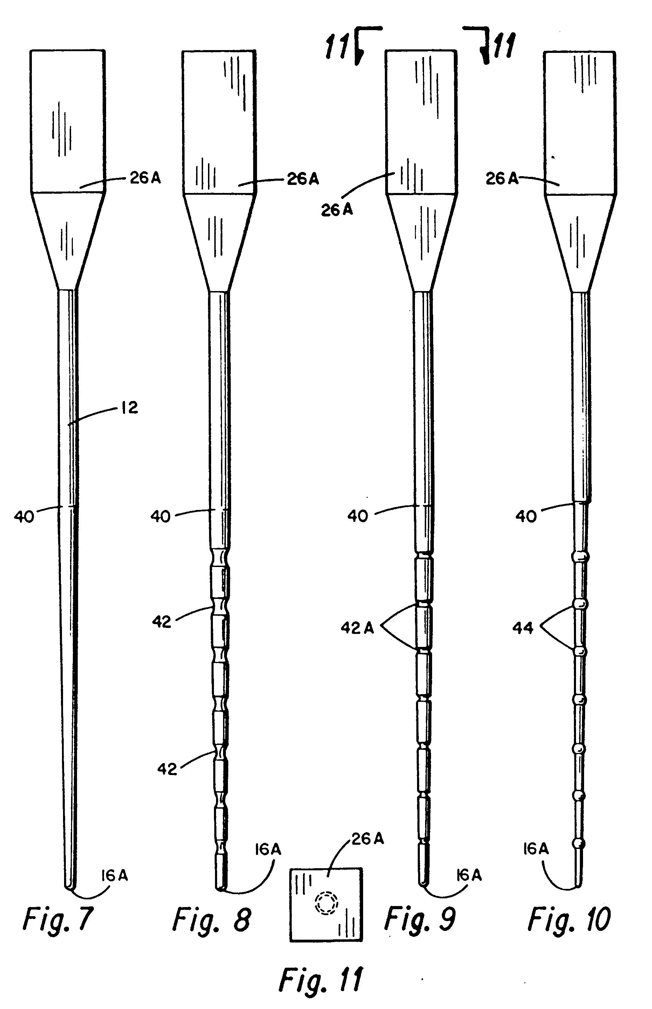

Figure 7 through 11 show a family of alternate embodiments of the invention preferably formed of plastic material. The shaft 12 is of elongated tapered shape in which the distal end 16 is slightly rounded. The handle 26A is integrally formed with the shaft and, as indicated in Figure 11, may be of non-circular cross-section, such as square as shown. Obviously, the handle may be also of hexagonal or other shapes which permits the tool to be manipulated by the endodontist.

The external surface of the shaft 12 of Figure 7 is preferably formed with a matte finish so that filler material formed thereon, such as in Figure 2, will be secured to the shaft for insertion into an endodontically prepared root canal. While a sliding washer is not shown in the embodiments of Figures 7 through 10 it is apparent that a washer can be utilized in the same way as illustrated in Figures 1 through 6.

The embodiment of Figures 7 through 10 does not include a flared end as with the embodiment of Figures 1 and 2, however, the lower portion of the shaft can be severed after insertion into a root canal by the provision of cuts 40 formed in the shaft. The cuts 40 are equivalent to the reduced diameter portion 22 of Figures 1 and 2 and provide a stress point. After the shaft is inserted into a root canal, the lower portion may be separated from the upper portion by moving the upper portion back and forth relative to the tooth in which the lower portion is positioned to break the shaft at cut 40.

Figures 8 and 9 show the embodiment of Figure 7 but with spaced apart, reduced diameter recesses 42 therein. In Figure 8 the recesses 42 are rather wide with a curved circumferential bottom surface whereas in Figure 9 the recesses 42A are much narrower. This illustrates that the shape, size and spacing of the recesses may vary.

Figure 10 shows an embodiment including integral enlarged diameter portions 44. These portions are semicircular in external configuration as compared with the cylindrical configurations of the enlarged diameter portions 20A through 20C as shown in Figures 1 and 2. The enlarged diameter portions 44 serve to help retain filler material on the shaft while it is being inserted into a root canal.

The alternate embodiments of Figures 7 through 10 illustrate the fact that the tool may take a variety of configurations, each of which is within the purview of the invention and each of which serves the function of permitting more ready and effective insertion of filler material into an endodontically prepared root canal.

## Claims

1. A tool (10) and filler material (28) combination as a manufactured product for use in filling an endodontically prepared root canal (32) of a tooth (30), the canal (32) extending from the tooth coronal area to the root apex, the tool having an elongate shaft (12) formed of material having high biological tolerance, the shaft (12) having a distal end portion (16,16A) and a proximal end portion (14,26A) such that the distal end portion (16,16A), is positionable adjacent the tooth root apex (36) when the shaft (12) is inserted axially into a root canal (32), the proximal end portion (14) forming a handle portion (26,26A), the shaft (12) being for receiving filler material (28) thereon and being insertable into an endodontically prepared root canal (32) and the handle proximal end portion being severable from the distal portion to thereby enable the distal portion and filler material (28) to be retained within the root canal (32), characterized in that said shaft (12) has said filler material (28) moulded thereon; and that the shaft (12) is axially, non-rotatably insertable into said canal, and said shaft (12) is adapted so as to have adhesion surfaces for said filler material on said shaft (12) with said adhesion surfaces comprising: a matte finish; or integral, spaced apart, enlarged diameter portions (20A,20B,20C,44) or reduced diameter portions (42,42A) that are each in a plane perpendicular to the longitudinal axis of said shaft (12).

2. A combination as claimed in claim 1, characterized in that said distal end (16) is non-circular in cross-section such as to resist rotation in the root canal (32) whereby the proximal end handle portion may be severable from the distal end portion by the application of rotary torque to the proximal end handle portion.

3. A combination as claimed in claim 1 characterized in that said shaft (12) has smooth tapered shape, circular in cross-section taken perpendicular the longitudinal axis thereof.

4. A combination as claimed in any of claims 1 to 3, characterized in that a stopper washer (24) or like collar is slidably received on said shaft (12) in a region between said filler material (28) and said proximal end or handle and such that, in use, upon axial displacement of said shaft (12) relative thereto following severance of the shaft can be held so as to act to retain said filler maternal (28) in said canal (32).

5. A combination as claimed in any of claims 1 to 4, characterized in that the filler material (28) is moulded on said shaft (17) in conically or other tapered form.

6. A tool (10) for use in filling an endodontically prepared root canal (32) of a tooth (30), the canal (32) extending from the tooth coronal area to the root apex, the tool having an elongate shaft (12) formed of material having high biological tolerance, the shaft (12) having a distal end portion (16,16A) and a proximal end portion (14,26A) such that the distal end portion (16,16A) is positionable adjacent the tooth root apex (36) when the shaft (12) is inserted into a root canal (32), the proximal end portion (14) forming a handle portion (26,26A), the distal portion (16,16A) of said shaft (12) having filler material (28) formed thereon and being insertable into an endodontically prepared root canal (32) and the handle proximal end portion being severable from the distal portion to thereby retain the distal portion and filler material (28) within the root anal (32) characterized in that means are provided to provide adhesion surface for the filler material on the shaft (12) and comprise either said shaft (12) having a matte finish to receive and retain filler material thereon, or said shaft (12) including integral, spaced apart, enlarged diameter portions (20A,20B,20C,44) that are each in a plane perpendicular to the longitudinal axis of said shaft (12); or said shaft (12) including integral, spaced apart, reduced diameter portions (42,42A) that are each in a plane perpendicular to the longitudinal axis of said shaft (12).

## Patentansprüche

1. Werkzeug (10) und Füllmaterial (28) in Kombination als Fertigprodukt zur Füllung eines im Inneren eines Zahnes (30) vorbereiteten Wurzelkanals (32), der sich von der Zahnkrone bis zur Wurzelspitze (36) erstreckt, wobei das Werkzeug (10) einen verlängerten Schaft (12) hat, der aus einem Material hoher biologischer Widerstandsfähigkeit geformt ist und der ein unteres Endstück (16, 16A) sowie ein oberes Endstück (14, 26A) aufweist, dergestalt, daß das untere Endstück (16, 16A) an der Zahnwurzelspitze (36) anliegend positioniert werden kann, indem der Schaft (12) axial in den Zahnwurzelkanal (32) eingeführt wird, wobei das obere Endstück (14) zu einem Griffstück (26, 26A) ausgebildet sein kann, und der Schaft (12), der zur Aufnahme von Füllmaterial (28) dient, nachdem er in den innerhalb des Zahnes (30) vorbereiteten Wurzelkanal (32) eingeführt wurde, vom oberen Teil abgetrennt werden kann, so daß der untere Teil mit dem Füllmaterial (28) im Wurzelkanal (32) zurückbleibt, dadurch gekennzeichnet, daß das Füllmaterial (28) auf den Schaft (12), der axial, nicht drehbar in den Wurzelkanal (32) einführbar ist, und dessen Oberflächen haftend sind, indem sie eine äußerst matte Beschaffenheit haben oder indem der Schaft (12) in Abständen angeordnete Teilstücke vergrößerten Durchmessers (20A, 20B, 20C, 44) oder Teilstücke verringerten Durchmessers (42, 42A) aufweist, deren Ebenen jeweils senkrecht zu der Längsachse des Schaftes (12) stehen, aufmodelliert ist.

2. Kombination nach Anspruch 1, dadurch gekennzeichnet, daß das untere Ende (16) des Schaftes (12) einen nicht kreisförmigen Querschnitt aufweist, dergestalt, daß beim Aufbringen eines Drehmoments auf das obere End- (14, 26A) oder Griffstück (26) der Schaft einer Drehung im Wurzelkanal (32) einen Widerstand entgegensetzt, so daß das obere Ende des Werkzeugs (10) vom unteren Teil des Schaftes (12) getrennt wird.

3. Kombination nach Anspruch 1, dadurch gekennzeichnet, daß der Schaft (12) eine sanft gewellte Form hat, die einen kreisförmigen Querschnitt senkrecht zur Längsachse des Schaftes (12) aufweist.

4. Kombination nach einem der Ansprüche 1 bis 3, dadurch gekennzeichnet, daß ein pfropfenförmiger oder manschettenartiger Ring (24) zwischen dem Füllmaterial (28) und dem oberen Endstück (14, 26A) des Werkzeuges (10) verschiebbar auf den Schaft (12) aufgenommen ist, so daß der Pfropfen (24) bei einer auf eine Verlagerung des Schaftes (12) relativ zur Schaftachse folgenden Durchtrennung des Schaftes (12) das Füllmaterial (28) im Kanal (32) zurückhält.

5. Kombination nach einem der Ansprüche 1 bis 4, dadurch gekennzeichnet, daß das Füllmaterial (28) auf den Schaft (12) in einer konischen oder anders verjüngten Form aufmodeliert ist.

6. Werkzeug (10) zur Füllung eines im Inneren eines Zahnes (30) vorbereiteten Wurzelkanals (32), der sich von der Zahnkrone bis zur Wurzelspitze (36) erstreckt, wobei das Werkzeug einen verlängerten Schaft (12) hat, der aus einem Material hoher biologischer Widerstandsfähigkeit geformt ist und der ein unteres Endstück (16, 16A) sowie ein oberes Endstück (14, 26A) aufweist, dergestalt, daß das untere Endstück (16, 16A) an der Zahnwurzelspitze (36) anliegend positioniert werden kann, indem der Schaft (12) in den Zahnwurzelkanal (32) eingeführt wird, wobei das obere Endstück (14) zu einem Griffstück (26, 26A) ausgebildet sein kann, und der Schaft (12), der zur Aufnahme von Füllmaterial (28) dient, nachdem er in den innerhalb des Zahnes (30) vorbereiteten Wurzelkanal (32) eingeführt wurde, vom oberen Teil abgetrennt werden kann, so daß der untere Teil mit dem Füllmaterial (28) im Wurzelkanal (32) zurückbleibt, dadurch gekennzeichnet, daß der Schaft (12) haftende Oberflächen aufweisen kann, derart, daß sie eine äußerst matte Beschaffenheit haben oder indem der Schaft (12) in Abständen angeordnete Teilstücke vergrößerten Durchmessers (20A, 20B, 20C, 44) oder Teilstücke verringerten Durchmessers (42, 42A) aufweist, deren Ebenen jeweils senkrecht zu der Längsachse des Schaftes (12) stehen.

## Revendications

1. Combinaison d'un outil (10) et d'un matériau de remplissage (28) formant un article destiné au remplissage d'un canal (32) - traité par des procédés endodontiques - d'une racine d'une dent (30), le canal (32) s'étendant depuis la région coronale de la dent jusqu'à l'apex de la racine, l'outil comportant une tige allongée (12) formée en un matériau présentant une très bonne compatibilité biologique, la tige (12) ayant une portion terminale distale (16, 16a) et une portion terminale proximale (14, 26A), telles que la portion terminale distale (16, 16A) puisse être positionnée près de l'apex (36) de la racine de la dent lorsque la tige (12) est insérée axialement dans le canal (32) de la racine, la portion terminale proximale (14) formant une portion de poignée (26, 26A), la tige (12) étant agencée pour recevoir sur elle le matériau de remplissage (28) et pour pouvoir être insérée dans le canal (32) - préparé par les procédés endodontiques - de la racine de la dent et la portion terminale proximale servant de poignée pouvant être coupée de la portion distale pour permettre de retenir la portion terminale distale et le matériau de remplissage (28) dans le canal (32) de la racine, caractérisée en ce que ladite tige (12) porte ledit matériau de remplissage (28) moulé sur elle; et en ce que la tige (12) peut être insérée axialement sans pouvoir tourner dans ledit canal et que ladite tige (12) est réalisée pour avoir des surfaces d'adhésion pour ledit matériau de remplissage sur ladite tige (12) comprenant : un fini mat; ou des portions faisant partie intégrante de la tige, mutuellement espacées et d'un diamètre augmenté (20A, 20B, 20C, 44) ou d'un diamètre diminué (42, 42A) qui sont chacune dans un plan perpendiculaire à l'axe longitudinal de ladite tige (12).

2. Combinaison selon la revendication 1, caractérisée en ce que ladite extrémité distale (16) est non circulaire en coupe transversale de manière à résister à la rotation dans le canal (32) de la racine, l'extrémité proximale servant de poignée pouvant être coupée de la portion terminale distale par l'application d'un couple de rotation à la portion terminale proximale servant de poignée.

3. Combinaison selon la revendication 1, caractérisée en ce que ladite tige (12) a une forme régulièrement effilée et circulaire en coupe transversale perpendiculaire à son axe longitudinal.

4. Combinaison selon l'une quelconque des revendications 1 à 3, caractérisée en ce qu'une rondelle d'obturation (24) ou un collier similaire vient se placer d'une manière coulissante sur ladite tige (12) dans une région entre ledit matériau de remplissage (28) et ladite extrémité proximale ou poignée, pour qu'en cours d'utilisation, lorsque ladite tige (12) est déplacée axialement après sa coupure, il puisse être tenu pour retenir ledit matériau de remplissage (28) dans ledit canal (32).

5. Combinaison selon l'une des revendications 1 à 4, caractérisée en ce que le matériau de remplissage (28) est moulé sur ladite tige (17) en ayant la forme d'un cône ou une autre forme effilée.

6. Outil (10) destiné à être utilisé sur un canal (32) - préparé par des procédés endodontiques - d'une racine (30) d'une dent, le canal (32) s'étendant depuis la région coronale de la dent jusqu'à l'apex de la racine, l'outil comportant une tige allongée (12) formée en un matériau pré-sentant une très bonne compatibilité biologique, la tige (12) ayant une portion terminale distale (16, 16A) et une portion terminale proximale (14, 26A), telles que la portion terminale distale (16, 16A) puisse être positionnée près de l'apex (36) de la racine de la dent lorsque la tige (12) est insérée dans un canal (32) de la racine, la portion terminale proximale (14) formant une portion de poignée (26, 26A), la portion dis-tale (16, 16A) de ladite tige (12) portant un matériau de remplissage (28) formé sur elle et pouvant être insérée dans un canal (32) - préparé par des procédés endodontiques - d'une racine, et la portion d'extrémité proximale servant de poignée pouvant être coupée de la portion distale pour conserver la portion distale et le matériau de remplissage (28) dans le canal (32) de la racine, caractérisé en ce que des moyens sont prévus pour fournir une surface d'adhésion pour le matériau de remplissage sur la tige (12), ces moyens étant constitués par un fini mat sur ladite tige (12) pour recevoir et retenir le matériau de remplissage, ou par des portions faisant partie intégrante de ladite tige (12), mutuellement espacées, et d'un diamètre augmenté (20A, 20B, 20C, 44), qui sont chacune dans un plan perpendiculaire à l'axe longitudinal de ladite tige (12); ou par des portions faisant partie intégrante de la tige (12), mutuellement espacées, et d'un diamètre diminué (42, 42A), qui sont chacune dans un plan perpendiculaire à l'axe longitudinal de ladite tige (12).
